# EUROPÄISCHE PATENTSCHRIFT

(11) **EP 0 574 069 B1**
(45) Veröffentlichungstag und Bekanntmachung des Hinweises auf die Patenterteilung: **01.10.1997**
(21) Anmeldenummer: 93201565.4
(22) Anmeldetag: 02.06.1993
(51) Int. Cl.: G11B 17/028

(54) **Gerät zum Abtasten eines Kreisscheibenförmigen Aufzeichnungsträgers**
Device for scanning a disc-shaped record carrier
Dispositif d'exploration d'un support d'enregistrement en forme de disque

(30) Priorität: 10.06.1992 AT 1187/92
(43) Veröffentlichungstag der Anmeldung: 15.12.1993
(73) Patentinhaber: Philips Electronics N.V., 5621 BA Eindhoven (NL)
(72) Erfinder: Heinrich, Norbert, NL-5656 AA Eindhoven (NL)
(74) Vertreter: Schrijnemaekers, Hubert Joannes Maria

(56) Entgegenhaltungen:
- EP-A- 0 159 100
- US-A- 3 817 469
- US-A- 4 109 878
- US-A- 4 730 300
- PATENT ABSTRACTS OF JAPAN, Bd. 10, Nr. 15 (P-442) (2072) 21. Januar 1986;& JP-A-60 170 060

## Beschreibung

Die Erfindung bezieht sich auf ein Gerät zum Abtasten eines kreisscheibenförmigen Aufzeichnungsträgers, der ein zentrisch vorgesehenes Positionierloch aufweist, mit einem um eine Achse rotierend antreibbaren Drehteller, auf den der Aufzeichnungsträger koaxial aufsetzbar ist und der einen durch das Positionierloch hindurchführbaren, bezüglich der Achse im wesentlichen zentrisch symmetrisch ausgebildeten Positionierteil aufweist, in dem eine Andruckeinrichtung vorgesehen ist, mit der der Aufzeichnungsträger in axialer Richtung gegen den Drehteller drückbar ist, wobei der Positionierteil einen zu der Achse koaxialen, ringförmigen, in radialer Richtung nach außen hin offen ausgebildeten Käfig und die Andruckeinrichtung eine in den Käfig eingesetzte Schraubenfeder aufweist, deren Windungen in radialer Richtung aus dem Käfig in dem Positionierteil herausragen zum Zusammenwirken mit einem auf den Drehteller aufgesetzten Aufzeichnungsträger im Bereich von dessen Positionierloch, um den Aufzeichnungsträger in axialer Richtung gegen den Drehteller zu drücken.

Ein solches Gerät entsprechend der im vorstehenden ersten Absatz angeführten Gattung ist beispielsweise aus der EP 0 159 100 A1 bekannt. Bei diesem bekannten Gerät weist der ringförmige Käfig in dem Positionierteil des Drehtellers eine solche Höhe in Richtung der Achse des Drehtellers auf, daß die Windungen der Schraubenfeder beim Einsetzen derselben in den Käfig in radialer Richtung gesehen ihre ursprüngliche Ausgangsneigungslage gegenüber der Schraubenfederachse beibehalten. Diese Ausgangsneigungslage der Windungen der Schraubenfeder gegenüber der Schraubenfederachse hängt von den Parametern der Schraubenfeder ab. In der Ausgangsneigungslage weist in radialer Richtung gesehen der Winkel zwischen den Windungen einer Schraubenfeder und der Schraubenfederachse einen großen Wert auf, der nur relativ wenig von dem Wert von 90° abweicht. Infolge dieser Gegebenheiten wirken bei dem bekannten Gerät die Windungen der Schraubenfeder hauptsächlich in radialer Richtung des Drehtellers auf einen Aufzeichnungsträger im Bereich von dessen Positionierloch ein. Hiebei sind aber nur relativ kleine Andruckkräfte erzielbar, mit denen der Aufzeichnungsträger in axialer Richtung gegen den Drehteller gedrückt wird. Deshalb erfolgt bei dem bekannten Gerät das Andrücken eines Aufzeichnungsträgers an den Drehteller auf relativ unsichere Weise, so daß die Gefahr, daß ein Aufzeichnungsträger von der Schraubenfeder nicht ausreichend fest gegen den Drehteller gedrückt wird und daher sich von dem Drehteller löst, relativ groß ist. Diese Gefahr ist insbesondere bei stoßartigen Belastungen, wie sie bei Geräten zum Einsatz in Kraftfahrzeugen und bei tragbaren Geräten relativ häufig auftreten, besonders groß.

Die Erfindung hat sich zur Aufgabe gestellt, die vorstehend angeführten Schwierigkeiten zu vermeiden und bei einem Gerät gemäß der im ersten Absatz angeführten Gattung auf besonders einfache Weise ein sicheres Andrücken eines Aufzeichnungsträgers an den Drehteller eines solchen Gerätes zu gewährleisten. Hiefür ist die Erfindung dadurch gekennzeichnet, daß der ringförmige Käfig in dem Positionierteil des Drehtellers eine größte Höhe in Richtung der Achse des Drehtellers aufweist, die kleiner ist als der Außendurchmesser der Schraubenfeder in ihrem Ausgangszustand vor dem Einsetzen in den Käfig, und daß die Windungen der Schraubenfeder in dem Käfig in einer Betriebsneigungslage gegenüber der Schraubenfederachse gehalten sind, in der die Windungen in radialer Richtung gesehen gegenüber der Schraubenfederachse eine geringere Neigung aufweisen als in ihrer Ausgangsneigungslage vor dem Einsetzen der Schraubenfeder in den Käfig. Auf diese Weise ist erreicht, daß die Windungen der Schraubenfeder beim Einsetzen derselben in den Käfig in dem Positionierteil des Drehtellers in radialer Richtung gesehen gegenüber ihrer ursprünglichen, relativ steilen Ausgangsneigungslage in eine gegenüber der Schraubenfederachse weniger stark geneigte Betriebsneigungslage verstellt werden, wodurch die Windungen der Schraubenfeder im eingesetzten Zustand der Schraubenfeder eine relativ flache Lage einnehmen und wodurch die einzelnen Windungen der Schraubenfeder vorgespannt werden, so daß die Windungen der Schraubenfeder beim Zusammenwirken mit einem Aufzeichnungsträger in einer relativ flachen Schräglage und mit einer relativ großen Kraft auf den Aufzeichnungsträger im Bereich von dessen Positionierloch einwirken. Hiedurch ist erreicht, daß die einzelnen Windungen der Schraubenfeder hauptsächlich in Richtung der Achse des Drehtellers auf den Aufzeichnungsträger im Bereich von dessen Positionierloch einwirken und eine relativ starke Kraftkomponente in Richtung der Achse des Drehtellers auf den Aufzeichnungsträger ausüben, wodurch der Aufzeichnungsträger mit hoher Sicherheit an dem Drehteller festgehalten wird.

Der ringförmige Käfig kann in radialer Richtung im wesentlichen eine gleichbleibende Höhe in Richtung der Achse des Drehtellers aufweisen. Als besonders vorteilhaft hat sich aber erwiesen, wenn der ringförmige Käfig von dem Bereich seiner größten Höhe in radialer Richtung nach innen zu eine abnehmende Höhe aufweisend ausgebildet ist. Auf diese Weise ist erreicht, daß ein Ausweichen der Windungen der Schraubenfeder in radialer Richtung nach innen zu durch die sich verjüngende Ausbildung des Käfigs erschwert wird und daß bei einem Ausweichen der Windungen in radialer Richtung nach innen zu, wie dies beim Aufsetzen eines Aufzeichnungsträgers auf den Drehteller und auch beim Abnehmen eines Aufzeichnungsträgers von dem Drehteller erfolgt, die Windungen in radialer Richtung gesehen gegenüber ihrer normalen Betriebsneigungslage noch mehr flach gestellt und daher noch mehr vorgespannt werden, was ein unerwünschtes Trennen des Aufzeichnungsträgers von dem Drehteller praktisch unmöglich macht und die Sicherheit, mit der ein Aufzeichnungsträger an dem Drehteller festgehalten wird, besonders groß macht.

Als besonders vorteilhaft hat sich weiters erwiesen, wenn in dem ringförmigen Käfig mindestens drei mit dem Drehteller verbundene Stege vorgesehen sind, die je zwischen zwei Windungen der in den Käfig aufgenommenen Schraubenfeder liegen und die je eine in radialer Richtung außen liegende Begrenzungsfläche aufweisen, die als Positionierfläche zur radialen Positionierung des Aufzeichnungsträgers auf dem Drehteller vorgesehen ist. Auf diese Weise ist mit besonders einfachen Mitteln eine ausgezeichnete Positionierung des Aufzeichnungsträgers an dem Drehteller in radialer Richtung desselben sichergestellt.

Weiters hat sich als besonders vorteilhaft erwiesen, wenn die Schraubenfeder auf einen einmalig durch einen im wesentlichen in radialer Richtung verlaufenden Schlitz unterbrochenen Montagering aufgesetzt ist. Auf diese Weise ist ein besonders einfaches und erwünschtenfalls automatisiertes Einsetzen der auf den Montagering vormontierten Schraubenfeder sichergestellt.

Als besonders vorteilhaft hat sich weiters erwiesen, wenn der Drehteller eine den Drehteller quer zu seiner Achse durchtrennende, in den Käfig in dem Positionierteil des Drehtellers mündende Trennzone aufweist, die den Drehteller in zwei Drehtellerteile unterteilt, die mit einer Verbindungseinrichtung zur Bildung des Drehtellers miteinander verbunden sind. Dies ist im Hinblick auf eine möglichst einfache Herstellbarkeit des gesamten Drehtellers samt der in seinem Positionierteil vorgesehenen Andruckeinrichtung vorteilhaft.

Hiebei hat sich als besonders vorteilhaft erwiesen, wenn die Verbindungseinrichtung durch mindestens eine Bajonettverbindung gebildet ist. Eine solche Bajonettverbindung gewährleistet ein einfaches Zusammensetzen und ein sicheres Zusammenhalten der beiden Drehtellerteile.

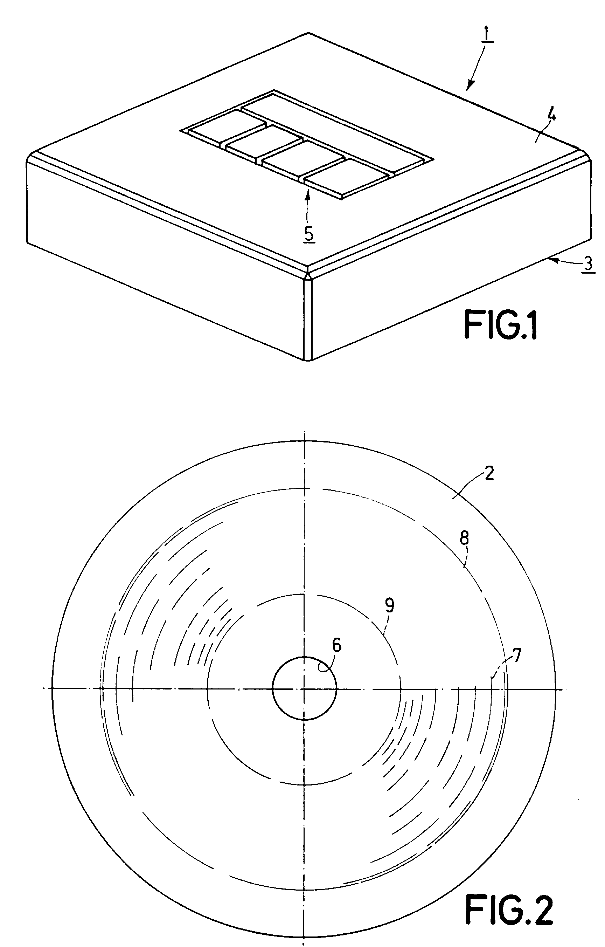

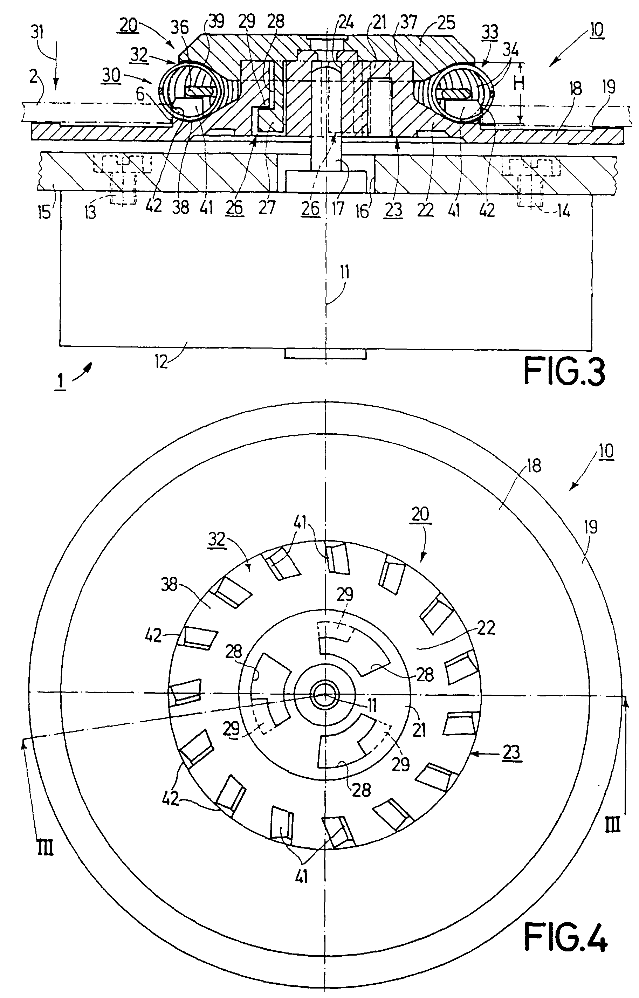

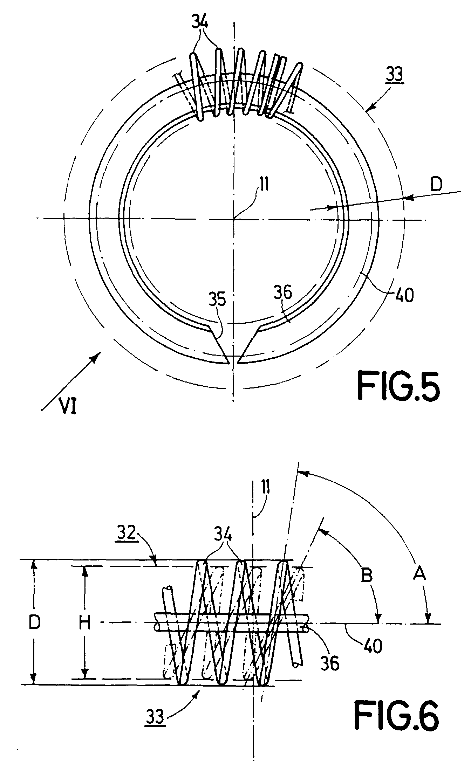

Die Erfindung wird im folgenden anhand eines in der Zeichnung dargestellten Ausführungsbeispieles näher beschrieben, auf das die Erfindung jedoch nicht beschränkt sein soll. Die Fig. 1 zeigt schematisch in Schrägansicht ein Gerät zum Abspielen eines kreisscheibenförmigen Aufzeichnungsträgers. Die Fig. 2 zeigt schematisch in Draufsicht und etwa in natürlicher Größe einen in das Gerät gemäß Fig. 1 einsetzbaren kreisscheibenförmigen Aufzeichnungsträger, der auf optische Weise abtastbar ist und der allgemein als sogenannte Compact Disc bekannt ist. Die Fig. 3 zeigt im Schnitt gemäß der Linie III-III in Fig. 4 in etwa fünffacher Vergrößerung gegenüber der natürlichen Größe einen Drehteller des Gerätes gemäß Fig. 1, auf den der Aufzeichnungsträger 2 aufsetzbar ist und der eine Andruckeinrichtung mit einer Schraubenfeder zum Andrücken des Aufzeichnungsträgers an den Drehteller aufweist. Die Fig. 4 zeigt in Draufsicht und ebenfalls in etwa fünffacher Vergrößerung gegenüber der natürlichen Größe einen Hauptbestandteil des Drehtellers gemäß Fig. 3. Die Fig. 5 zeigt in Draufsicht und ebenfalls in fünffacher Vergrößerung gegenüber der natürlichen Größe eine auf einen Montagering aufgesetzte Schraubenfeder, die Bestandteil der Andruckeinrichtung des Drehtellers gemäß Fig. 3 ist. Die Fig. 6 zeigt in einer Seitenansicht gemäß dem Pfeil VI in Fig. 5 in einem gegenüber der Fig. 5 doppelt so großen Maßstab einen Teil der auf den Montagering aufgesetzten Schraubenfeder gemäß Fig. 5.

Die Fig. 1 zeigt ein Gerät 1 zum Abspielen eines kreisscheibenförmigen Aufzeichnungsträgers 2, der in Fig. 2 dargestellt ist. Das Gerät 1 weist ein quaderförmiges Gehäuse 3 auf, das an seiner Deckenseite mit einem schwenkbaren Deckel 4 verschließbar ist. An diesem Deckel 4 ist ein Satz 5 von Tasten angebracht, mit dem die verschiedenen Betriebsarten des Gerätes 1 einschaltbar sind. Bei vom Gehäuse 3 weggeschwenktem Deckel 4 ist in das Gerät 1 der Aufzeichnungsträger 2 einsetzbar.

Wie aus Fig. 2 ersichtlich ist, weist der kreisscheibenförmige Aufzeichnungsträger 2 ein zentrisch vorgesehenes Positionierloch 6 auf. An seiner Unterseite ist der Aufzeichnungsträger 2 mit einer spiralförmig verlaufenden, auf optische Weise abtastbaren Spur 7 versehen, die sich zwischen einer äußersten Spur 8 und einer innersten Spur 9 erstreckt, wie dies in Fig. 2 schematisch mit strichlierten Linien angedeutet ist. In der Spur 7 sind Informationssignale gespeichert, die beispielsweise Musikstücke repräsentieren. Ein solcher Aufzeichnungsträger ist allgemein unter der Bezeichnung Compact Disc bzw. unter der Abkürzung CD bekannt.

Wie aus Fig. 3 ersichtlich ist, weist das Gerät 1 zum Halten und rotierenden Antreiben eines Aufzeichnungsträgers 2 einen Drehteller 10 auf, auf den ein Aufzeichnungsträger 2 koaxial aufsetzbar ist. Der Drehteller 10 ist um eine Achse 11 rotierend antreibbar. Hiefür weist das Gerät 1 einen Motor 12 auf, der mit Hilfe von Schrauben 13 und 14 an einer Chassisplatte 15 des Gerätes 1 befestigt ist. Durch ein Loch 16 in der Chassisplatte 15 ist eine Antriebswelle 17 des Motors 12 hindurchgeführt, auf die der Drehteller 10 aufgepreßt ist.

Der Drehteller 10 weist einen im wesentlichen kreisringförmigen und scheibenförmigen Auflageteil 18 auf, der in seinem äußeren Umfangsbereich mit einer ebenfalls kreisringförmigen Erhöhung 19 versehen ist, auf die der Aufzeichnungsträger 2, der in Fig. 3 schematisch mit einer strichpunktierten Linie angedeutet ist, auflegbar ist. Der Drehteller 10 weist weiters einen mit dem tellerartigen Auflageteil 18 verbundenen, durch das Positionierloch 6 des Aufzeichnungsträgers 2 hindurchführbaren, bezüglich der Achse 11 im wesentlichen zentrisch symmetrisch ausgebildeten Positionierteil 20 auf. Der Positionierteil 20 besteht hiebei aus einem mit dem Auflageteil 18 einstückig verbundenen, einen zentralen zylindrischen Lagerabschnitt 21 und einen kegelförmigen Verbindungsabschnitt 22 aufweisenden Basisteil 23 des Drehtellers 10, der eine zentrale Bohrung 24 aufweist, in die die Antriebswelle 17 des Motors 12 hineinragt, und aus einem Abdeckteil 25, der mit dem Basisteil 23 mit Hilfe von drei Bajonettverbindungen 26 verbunden ist. Jede Bajonettverbindung 26 weist hiebei einen vom Abdeckteil 25 abstehenden, im wesentlichen L-förmigen Haken 27 auf, der in eine Aussparung 28 im Basisteil 23 eingeführt ist und der nach einem Verdrehen des Abdeckteiles 25 gegenüber dem Basisteil 23 eine Schulter 29 im Basisteil 23 mit seinem abgewinkelten freien Ende hintergreift und auf diese Weise den Abdeckteil 25 am Basisteil 23 fixiert.

In dem Positionierteil 20 ist eine Andruckeinrichtung 30 vorgesehen, mit der der Aufzeichnungsträger 2 in der in Fig. 3 mit einem Pfeil 31 angegebenen axialen Richtung gegen den Drehteller 10 bzw. gegen dessen Erhöhung 19 am Auflageteil 18 drückbar ist. Hiebei weist der Positionierteil 20 einen zu der Achse 11 koaxialen, ringförmigen, in radialer Richtung nach außen hin offen ausgebildeten Käfig 32 auf. Die Andruckeinrichtung 30 weist eine in den Käfig 32 eingesetzte Schraubenfeder 33 auf, deren Windungen 34 in radialer Richtung aus dem Käfig 32 in dem Positionierteil 20 herausragen und mit dem auf den Drehteller 10 aufgesetzten Aufzeichnungsträger 2 im Bereich von dessen Positionierloch 6 zusammenwirken, um den Aufzeichnungsträger in der axialen Richtung 31 gegen den Drehteller 10 bzw. dessen Erhöhung 19 am Auflageteil 18 zu drücken. In Fig. 3 ist die Schraubenfeder 33 bzw. deren Windungen 34 mit vollen Linien in jener Situation dargestellt, in der kein Aufzeichnungsträger 2 auf dem Drehteller 10 aufliegt. Wenn ein Aufzeichnungsträger 2 auf den Drehteller 10 aufgesetzt wird, wie dies in Fig. 3 mit einer strichpunktierten Linie dargestellt ist, dann werden die Windungen 34 der Schraubenfeder 33 in radialer Richtung in den Käfig 32 hineinverstellt, wobei dann die Windungen 34 eine Lage einnehmen, wie diese schematisch in Fig. 3 ebenfalls mit einer strichpunktierten Linie angedeutet ist.

Wie aus Fig. 3 und auch aus den Figuren 5 und 6 ersichtlich ist, ist die Schraubenfeder 33 auf einen einmalig durch einen im wesentlichen in radialer Richtung verlaufenden Schlitz 35 unterbrochenen Montagering 36 aufgesetzt. Auf diese Weise kann die Schraubenfeder 33 einfach vor dem Einsetzen in den Käfig 32 im Positionierteil 20 auf den Montagering 36 vormontiert werden, wie dies in den Figuren 5 und 6 dargestellt ist.

Wie bereits vorstehend erwähnt, besteht der Drehteller 10 im wesentlichen aus zwei Drehtellerteilen, nämlich erstens aus dem Basisteil 23 samt dem damit einstückig verbundenen Auflageteil 18 und zweitens aus dem Abdeckteil 25, die voneinander durch eine den Drehteller 10 quer zu seiner Achse 11 durchtrennende, in den Käfig 32 im Positionierteil 20 des Drehtellers 10 mündende Trennzone 37 voneinander getrennt sind. Vor dem Einsetzen der Schraubenfeder 33 in den Käfig 32 sind die beiden Drehtellerteile 23, 18 und 25 voneinander getrennt. In diesem Zustand wird die auf den Montagering 36 vormontierte Schraubenfeder 33 auf die am Basisteil 23 befindliche bodenseitige Begrenzungswand 38 des Käfigs 32 aufgelegt. Danach wird der Abdeckteil 25 auf den Basisteil 23 aufgesetzt, wobei die L-förmigen Haken 27 in die Aussparungen 28 eingeführt werden, wonach dann der Abdeckteil 25 gegenüber dem Basisteil 23 geringfügig verdreht wird, so daß die Bajonettverbindungen 26 zur Wirkung kommen und die L-förmigen Haken 27 die Schultern 29 hintergreifen, wodurch der Abdeckteil 25 am Basisteil 23 fixiert wird. Bei dieser Befestigung des Abdeckteiles 25 an dem Basisteil kommt auch die am Abdeckteil 25 befindliche deckenseitige Begrenzungswand 39 des Käfigs 32 mit der in den Käfig 32 eingesetzten Schraubenfeder 33 in Kontakt.

Bei dem vorliegenden Gerät 1 weist nunmehr, wie dies insbesondere aus Fig. 6 ersichtlich ist, der ringförmige Käfig 32, der in Fig. 6 lediglich schematisch mit strichlierten Linien angedeutet ist, eine größte Höhe H in Richtung der Achse 11 des Drehtellers 10 auf, die kleiner ist als der Außendurchmesser D der Schraubenfeder 33 in ihrem Ausgangszustand vor dem Einsetzen in den Käfig 32, welcher Ausgangszustand in Fig. 6 mit vollen Linien dargestellt ist. Der Betriebszustand der Schraubenfeder 33, wenn diese also in den Käfig 32 eingesetzt ist, ist in Fig. 6 mit strichpunktierten Linien dargestellt. Wie aus Fig. 6 weiters ersichtlich ist, sind die Windungen 34 der Schraubenfeder 33 in dem Käfig 32 in einer Betriebsneigungslage B gegenüber der Schraubenfederachse 40 gehalten, in der die Windungen 34 in radialer Richtung bezüglich der Achse 11 des Drehtellers 10 gesehen gegenüber der Schraubenfederachse 40 eine geringere Neigung aufweisen als in ihrer Ausgangsneigungslage A vor dem Einsetzen der Schraubenfeder 33 in den Käfig 32.

Wie aus Fig. 3 weiters ersichtlich ist, ist der ringförmige Käfig 32 von dem Bereich seiner größten Höhe H in radialer Richtung nach innen zu eine abnehmende Höhe aufweisend, also sich verjüngend ausgebildet.

Weiters ist aus Fig. 3 und insbesondere aus Fig. 4 ersichtlich, daß in dem ringförmigen Käfig 32 fünfzehn mit dem Drehteller 10 verbundene Stege 41 vorgesehen sind, die je zwischen zwei Windungen 34 der in dem Käfig 32 aufgenommenen Schraubenfeder 33 liegen und die je eine in radialer Richtung außen liegende Begrenzungsfläche 42 aufweisen, die als Positionierfläche zur radialen Positionierung des Aufzeichnungsträgers 2 auf dem Drehteller 10 vorgesehen ist.

Bei dem vorstehend beschriebenen Gerät ist auf besonders einfache Weise erreicht, daß die Windungen der Schraubenfeder beim Einsetzen derselben in den Käfig in dem Positionierteil des Drehtellers in radialer Richtung gesehen gegenüber ihrer ursprünglichen, relativ steilen Ausgangsneigungslage in eine gegenüber der Schraubenfederachse weniger stark geneigte Betriebsneigungslage verstellt werden, wodurch die Windungen der Schraubenfeder im eingesetzten Zustand der Schraubenfeder eine relativ flache Lage einnehmen und wodurch die einzelnen Windungen der Schraubenfeder vorgespannt werden. Dies hat zur Folge, daß die einzelnen Windungen der Schraubenfeder hauptsächlich in Richtung der Achse des Drehtellers auf den Aufzeichnungsträger einwirken und eine relativ starke Kraftkomponente in Richtung dieser Achse auf den Aufzeichnungsträger ausüben, wodurch der Aufzeichnungsträger mit hoher Sicherheit an dem Drehteller festgehalten wird. Dabei ist durch die sich nach innen hin verjüngende Ausbildung des Käfigs weiters erreicht, daß zum Abnehmen eines Aufzeichnungsträgers vom Drehteller eine zusätzliche Kraftwirkung der Schraubenfeder überwunden werden muß, so daß einem ungewollten Abheben eines Aufzeichnungsträgers vom Drehteller praktisch mit Sicherheit vorgebeugt ist.

Bei einem wie vorstehend beschriebenen Gerät hat sich beispielsweise als vorteilhaft erwiesen, wenn die Schraubenfeder aus einem Federdraht mit einem Drahtdurchmesser von 0,15 mm besteht und die Umfangslänge der Schraubenfeder im Federachsenbereich etwa 42 mm, der Außendurchmesser der Windungen etwa 3 mm und die größte Höhe des Käfigs für die Schraubenfeder etwa 2,7 mm beträgt und wenn die Windungen der Schraubenfeder in ihrem noch nicht in den Käfig eingebauten Ausgangszustand in radialer Richtung gesehen eine Neigung A zur Federachse von etwa 81° und in ihrem in den Käfig eingesetzten Betriebszustand in radialer Richtung gesehen eine Neigung B zur Federachse von etwa 65° bis 66° aufweisen, wenn noch kein Aufzeichnungsträger auf den Drehteller aufgesetzt ist. Bei auf den Drehteller aufgesetztem Aufzeichnungsträger ändert sich die Neigung B zur Federachse auf einen Wert von etwa 63° bis 60°, dies in Abhängigkeit von der Dicke des Aufzeichnungsträgers und dem Durchmesser des Positionierloches des Aufzeichnungsträgers. Beim Aufsetzen und Abnehmen eines Aufzeichnungsträgers kann die Neigung B bis auf einen Wert von etwa 55° bis 50° abnehmen, weil die Schraubenfeder mit ihren Windungen dabei relativ weit in den sich verjüngenden Käfig hineingedrückt wird, wodurch den Windungen eine relativ hohe Vorspannung erteilt wird, die ein unerwünschtes Abheben des Aufzeichnungsträgers vom Drehteller praktisch mit Sicherheit verhindert.

Die Erfindung ist nicht auf das vorstehend beschriebene Ausführungsbeispiel beschränkt. Bei dem vorstehend beschriebenen Ausführungsbeispiel handelt es sich bei der Schraubenfeder um eine linksgängige Feder; es kann aber auch eine rechtsgängige Schraubenfeder zum Einsatz kommen. Auch ist es denkbar, die im Käfig vorgesehenen Stege zur radialen Positionierung des Aufzeichnungsträgers wegzulassen, wobei dann die radiale Positionierung des Aufzeichnungsträgers beispielsweise von einem zylindrischen Abschnitt des Positionierteiles gegebenenfalls unter Mitwirkung der Windungen der Schraubenfeder vorgenommen werden kann. Die Erfindung ist auch bei anderen Aufzeichnungsträgern mit einem zentrisch vorgesehenen Positionierloch anwendbar, beispielsweise bei magnetisch abtastbaren Aufzeichnungsträgern.

## Patentansprüche

1. Gerät (1) zum Abtasten eines kreisscheibenförmigen Aufzeichnungsträgers (2), der ein zentrisch vorgesehenes Positionierloch (6) aufweist, mit einem um eine Achse (11) rotierend antreibbaren Drehteller (10), auf den der Aufzeichnungsträger (2) koaxial aufsetzbar ist und der einen durch das Positionierloch (6) hindurchführbaren, bezüglich der Achse (11) im wesentlichen zentrisch symmetrisch ausgebildeten Positionierteil (20) aufweist, in dem eine Andruckeinrichtung (30) vorgesehen ist, mit der der Aufzeichnungsträger (2) in axialer Richtung (31) gegen den Drehteller (10) drückbar ist, wobei der Positionierteil (20) einen zu der Achse (11) koaxialen, ringförmigen, in radialer Richtung nach außen hin offen ausgebildeten Käfig (32) und die Andruckeinrichtung (30) eine in den Käfig (32) eingesetzte Schraubenfeder (33) aufweist, deren Windungen (34) in radialer Richtung aus dem Käfig (32) in dem Positionierteil (20) herausragen zum Zusammenwirken mit einem auf den Drehteller (10) aufgesetzten Aufzeichnungsträger (2) im Bereich von dessen Positionierloch (6), um den Aufzeichnungsträger (2) in axialer Richtung gegen den Drehteller (10) zu drücken, dadurch gekennzeichnet, daß der ringförmige Käfig (32) in dem Positionierteil (20) des Drehtellers (10) eine größte Höhe (H) in Richtung der Achse (11) des Drehtellers (10) aufweist, die kleiner ist als der Außendurchmesser (D) der Schraubenfeder (33) in ihrem Ausgangszustand vor dem Einsetzen in den Käfig (32), und daß die Windungen (34) der Schraubenfeder (33) in dem Käfig (32) in einer Betriebsneigungslage (B) gegenüber der Schraubenfederachse (40) gehalten sind, in der die Windungen (34) in radialer Richtung gesehen gegenüber der Schraubenfederachse (40) eine geringere Neigung aufweisen als in ihrer Ausgangsneigungslage (A) vor dem Einsetzen der Schraubenfeder (33) in den Käfig (32).

2. Gerät nach Anspruch 1, dadurch gekennzeichnet, daß der ringförmige Käfig (32) von dem Bereich seiner größten Höhe (H) in radialer Richtung nach innen zu eine abnehmende Höhe aufweisend ausgebildet ist. (Fig. 3)

3. Gerät nach Anspruch 1 oder 2, dadurch gekennzeichnet, daß in dem ringförmigen Käfig (32) mindestens drei mit dem Drehteller (10) verbundene Stege (41) vorgesehen sind, die je zwischen zwei Windungen (34) der in den Käfig (32) aufgenommenen Schraubenfeder (33) liegen und die je eine in radialer Richtung außen liegende Begrenzungsfläche (42) aufweisen, die als Positionierfläche zur radialen Positionierung des Aufzeichnungsträgers (2) auf dem Drehteller (10) vorgesehen ist. (Fig. 3, 4)

4. Gerät nach einem der vorhergehenden Ansprüche, dadurch gekennzeichnet, daß die Schraubenfeder (33) auf einen einmalig durch einen im wesentlichen in radialer Richtung verlaufenden Schlitz (35) unterbrochenen Montagering (36) aufgesetzt ist. (Fig. 3, 5, 6)

5. Gerät nach einem der vorhergehenden Ansprüche, dadurch gekennzeichnet, daß der Drehteller (10) eine den Drehteller (10) quer zu seiner Achse (11) durchtrennende, in den Käfig (32) in dem Positionierteil (20) des Drehtellers (10) mündende Trennzone (37) aufweist, die den Drehteller (10) in zwei Drehtellerteile (23, 18, 25) underteilt, die mit einer Verbindungseinrichtung (26) zur Bildung des Drehtellers (10) miteinander verbunden sind. (Fig. 3, 4)

6. Gerät nach Anspruch 5, dadurch gekennzeichnet, daß die Verbindungseinrichtung (26) durch mindestens eine Bejonettverbindung gebildet ist. (Fig. 3, 4)

## Claims

1. An apparatus (1) for scanning a disc-shaped record carrier (2) having a central positioning hole (6), which apparatus comprises a turntable (10) which is rotationally drivable about an axis (11) and on which the record carrier (2) can be placed coaxially, which turntable comprises a positioning member (20) which is engageable in the positioning hole (6) and is substantially centrically symmetrical relative to the axis (11), in which positioning member a pressure device (30) is arranged to press the record carrier (2) onto the turntable (10) in an axial direction (31), the positioning member (20) having an annular recess (32), which is coaxial with the axis (11) and which is open in a radially outward direction, and the pressure device (30) comprising a coil spring (33) arranged in the recess (32) and having turns (34) which project radially from the recess (32) in the positioning member (20) to cooperate with a record carrier (2), which has been placed onto the turntable (10), in the area of the positioning hole (6) of said record carrier in order to press the record carrier (2) against the turntable (10) in an axial direction, characterized in that in the direction of the axis (11) of the turntable (10) the annular recess (32) in the positioning member (20) of the turntable (10) has a maximum height (H) smaller than the outer diameter (D) of the coil spring (33) in its no-load condition before it is mounted in the recess (32), and in the recess (32) the turns (34) of the coil spring (33) are held in an operational inclination condition (B) relative to the coil-spring axis (40), in which condition the turns (34), viewed in a radial direction, have an inclination relative to the coil-spring axis (40) which is less steep than in their no-load inclination condition (A) before the coil spring (33) is mounted in the recess (32).

2. An apparatus as claimed in Claim 1, characterized in that the annular recess (32) is shaped in such a way that its height decreases from the location of its maximum height (H) in a radially inward direction. (Fig. 3)

3. An apparatus as claimed in Claim 1 or 2, characterized in that in the annular recess (32) at least three ridges (41) connected to the turntable (10) are provided, which ridges are each situated between two turns (34) of the coil spring (33) in the recess (32) and each have a radially outward bounding surface (42) serving as a positioning surface for radially positioning the record carrier (2) on the turntable (10). (Figs. 3, 4)

4. An apparatus as claimed in any one of the preceding Claims, characterized in that the coil spring (33) is arranged on a mounting ring (36) having one interruption in the form a substantially radial slit (35). (Figs. 3, 5, 6)

5. An apparatus as claimed in any one of the preceding Claims, characterized in that the turntable (10) has a separating zone (37) which separates the turntable (10) transversely of its axis (11) and which terminates in the recess (32) in the positioning member (20) of the turntable (10), which zone divides the turntable (10) into two turntable parts (23, 18; 25) which are interconnected by means of a connecting device (26) to form the turntable (10). (Figs. 3, 4)

6. An apparatus as claimed in Claim 1, characterized in that the connecting device (26) is formed by at least one bayonet joint. (Figs. 3, 4)

## Revendications

1. Appareil (1) de lecture d'un support d'enregistrement (2) en forme de disque qui présente un orifice de positionnement (6) prévu centralement avec un plateau rotatif (10) entraîné à rotation autour d'un axe (11) sur lequel le support d'enregistrement (2) peut être placé de manière coaxiale et qui présente une pièce de positionnement (20) de conception symétrique essentiellement centrale par rapport à l'axe (11) qui peut être traversée par l'orifice de positionnement (6), dans lequel est prévu un dispositif de compression (30) avec lequel le support d'enregistrement (2) peut être pressé en direction axiale (31) contre le plateau rotatif (10), la pièce de positionnement (20) présentant un logement de conception ouverte vers l'extérieur en direction radiale, circulaire et coaxial par rapport à l'axe (11) et le dispositif de compression (30) présentant un ressort à boudin inséré dans le logement (32) dont les spires (34) débordent en direction radiale du logement (32) dans la pièce de positionnement (20) pour coopérer avec un support d'enregistrement (2) appliqué sur un plateau rotatif (10) dans la région de son orifice de positionnement (6) afin de presser le support d'enregistrement (2) en direction axiale contre le plateau rotatif (10), caractérisé en ce que le logement circulaire (32) présente dans la pièce de positionnement (20) du plateau rotatif (10) une hauteur maximale (H) dans la direction de l'axe (11) du plateau rotatif (10) qui est inférieure au diamètre externe (D) du ressort à boudin (33) dans sa position de départ avant son introduction dans le logement (32) et que les spires (34) du ressort à boudin (33) dans le logement (32) sont maintenues dans une position inclinée de fonctionnement (B) par rapport à l'axe du ressort à boudin dans laquelle les spires (34) vues en direction radiale par rapport à l'axe du ressort à boudin (40) présentent une inclinaison inférieure à leur position d'inclinaison de départ (A) avant l'introduction du ressort à boudin (33) dans le logement (32).

2. Appareil selon la revendication 1, caractérisé en ce que le logement circulaire (32) est conçu pour présenter une hauteur croissante depuis la région de sa hauteur maximale (H) en direction radiale vers l'intérieur (Fig. 3).

3. Appareil selon l'une des revendications 1 ou 2, caractérisé en ce que, dans le logement circulaire (32), au moins trois nervures (41) fixées au plateau rotatif (10) sont prévues et sont respectivement appliquées entre deux spires (34) du ressort à boudin (33) introduit dans le logement (32) et présentent une surface de délimitation (42) dirigée vers l'extérieur en direction radiale qui est prévue comme surface de positionnement en vue du positionnement radial du support d'enregistrement (2) sur le plateau rotatif (10) (Fig. 3, 4).

4. Appareil selon l'une des revendications précédentes, caractérisé en ce que le ressort à boudin (33) est appliqué sur une bague de montage (36) interrompue une fois par une fente (35) s'étendant essentiellement en direction radiale (Fig. 3, 5, 6).

5. Appareil selon l'une des revendications précédentes, caractérisé en ce que le plateau rotatif (10) présente une zone de séparation (37) débouchant dans le logement (32) dans la pièce de positionnement (20) du plateau rotatif (10) et séparant le plateau rotatif (10) perpendiculairement à son axe (11), laquelle zone divise le plateau rotatif (10) en deux pièces de plateau rotatif (23, 18, 25) qui sont reliées l'une à l'autre par un dispositif de fixation (26) en vue de former le plateau rotatif (10) (Fig. 3, 4).

6. Appareil selon la revendication 5, caractérisé en ce que le dispositif de fixation (26) est formé par au moins une fixation à baïonnette (Fig. 3, 4).
